# EUROPEAN PATENT SPECIFICATION

(11) **EP 3 526 555 B1**
(45) Date of publication and mention of the grant of the patent: **14.04.2021**
(21) Application number: 16785393.6
(22) Date of filing: 13.10.2016
(51) Int. Cl.: G01F 11/26, B65G 47/14

(54) **COMPONENT DISPENSER**
KOMPONENTENSPENDER
DISTRIBUTEUR DE COMPOSANTS

(43) Date of publication of application: 21.08.2019
(73) Proprietor: ABB Schweiz AG, 5400 Baden (CH)
(72) Inventor: TRANGÄRD, Arne, 723 35 Västerås (SE); SIRKETT, Daniel, 722 10 Västerås (SE); LUNDBERG, Ivan, 722 46 Västerås (SE)
(74) Representative: Kransell & Wennborg KB
(86) International application number: PCT/EP2016/074527
(87) International publication number: WO 2018/068852

(56) References cited:
- WO-A1-2013/113367
- WO-A1-2015/110151
- US-A- 3 235 143
- US-A- 4 768 640
- US-A1- 2014 260 925

## Description

### TECHNICAL FIELD

The present invention relates to a device for dispensing components from a reservoir, and to a method for dispensing components in automated industrial systems.

### BACKGROUND ART

Feeding individual components from a disordered bulk storage is a common task in automated industrial systems. Feeding devices using many different principles and in different embodiments are known for specific feeding tasks. Known devices have typically in common that they are expensive and complicated devices with a plurality of moving parts.

It is conventionally known to dispense powder or granular substances such as salt or sugar with fixed quantity dispensers. One such dispenser is known from JP09301406A that discloses a container from which, when turned over, the contents are dispensed every time with good quantitative invariability. The dispenser of JP09301406A is not well adapted for the task of dispensing components in automated industrial systems.

US3235143A discloses a container which can be actuated by a series of tilting movements to discharge a measured amount of a liquid or particulate solid material via a spout.

WO 2013/113367 A1 discloses a component dispenser for disordered components which are displaced onto a pick surface through sequences of movement of single moveable parts of the component dispenser.

There remains a desire to obtain a component dispenser that is simple and inexpensive yet well adapted for the task of dispensing components in automated industrial systems.

### SUMMARY OF THE INVENTION

One object of the invention is to provide an improved component dispenser.

A further object of the invention is to provide an improved method for dispensing components in automated industrial systems.

These objects are achieved by the device according to appended claim 1, the robot system according to appended claim 7 and the method according to appended claim 10.

The invention is based on the realization that a component dispenser in an automated industrial system can be very simple if it is actuated by external means i.e. if the component dispenser as such does not comprise any actuators to carry out the dispensing of components.

There is provided a component dispenser comprising a reservoir, a dosing volume and a pick surface. The component dispenser is configured to displace a selection of components from the reservoir into the dosing volume as a result of being exposed to first sequence of movements. The component dispenser is further configured to displace the selection of components from the dosing volume onto the pick surface as a result of being exposed to a second sequence of movements. The component dispenser is yet further configured to return any components remaining on the pick surface back into the reservoir as a result of being exposed to a third sequence of movements.

The component dispenser may be configured to be actuated by external means.

The component dispenser optionally does not comprise any parts that move in relation to one another in order to achieve the displacement of the selection of components from the reservoir into the dosing volume and further onto the pick surface, and the return of any components remaining on the pick surface back into the reservoir.

The pick surface may be configured to be exchangeable.

The pick surface may be configured to align the components to be dispensed.

The pick surface may comprise geometrical features in its surface to align the components to be dispensed.

There is provided a robot system comprising an industrial robot and at least one component dispenser according to any of the preceding embodiments. The robot system may comprise a plurality of component dispensers according to any of the preceding embodiments. The robot system may comprise any suitable number of component dispensers.

The robot may be configured to actuate each component dispenser.

There is provided a method for dispensing components, the method comprising the steps of: providing a component dispenser as laid out above; and actuating the component dispenser by external means to dispense components from the reservoir onto the pick surface.

The component dispenser may be actuated by external means in the form of an industrial robot.

The method may comprise the step of turning over the component dispenser.

The method may comprise the step of tipping the component dispenser.

The method may comprise the step of shaking the component dispenser.

The method may comprise the step of determining whether the component dispenser is about to be out of components.

The method may comprise the step of weighing the component dispenser.

### BRIEF DESCRIPTION OF THE DRAWINGS

The invention will be explained in greater detail with reference to the accompanying drawings, wherein
- figure 1: shows an isometric view of a component dispenser according to one embodiment of the invention,
- figure 2: shows a cross section of the component dispenser of figure 1,
- figure 3: illustrates a work cycle of a component dispenser according to one embodiment of the invention, and
- figure 4: shows a robot system comprising a plurality of component dispensers according to figure 1.

### DESCRIPTION OF PREFERRED EMBODIMENTS

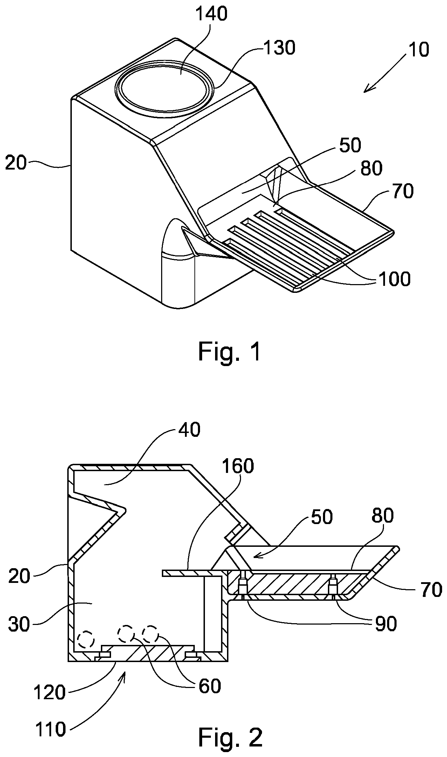

Referring to figures 1 and 2, a component dispenser 10 according to one embodiment of the invention comprises a housing 20 with an interior featuring a reservoir 30 and a dosing volume 40. The housing 20 has an outlet opening 50 through which components 60 can exit the interior onto an outlet tray 70 to which an exchangeable pick surface 80 is attached with two screws 90. A baffle plate 160 onto which the components 60 can land before ending up onto the pick surface 80 extends inwards from the outlet opening 50. The pick surface 80 is customized with geometrical features in its surface to suit the parts being dispensed. For example, to align cylindrical components 60, the pick surface 80 may be furnished with a pattern of longitudinal furrows 100.

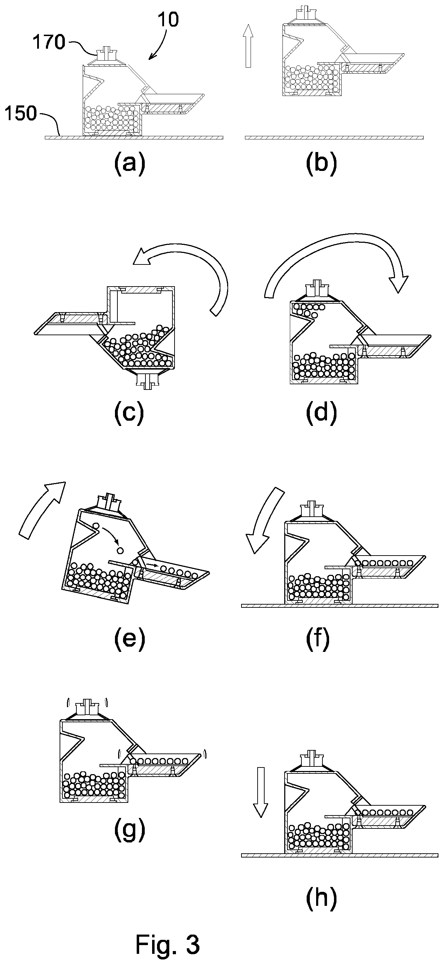

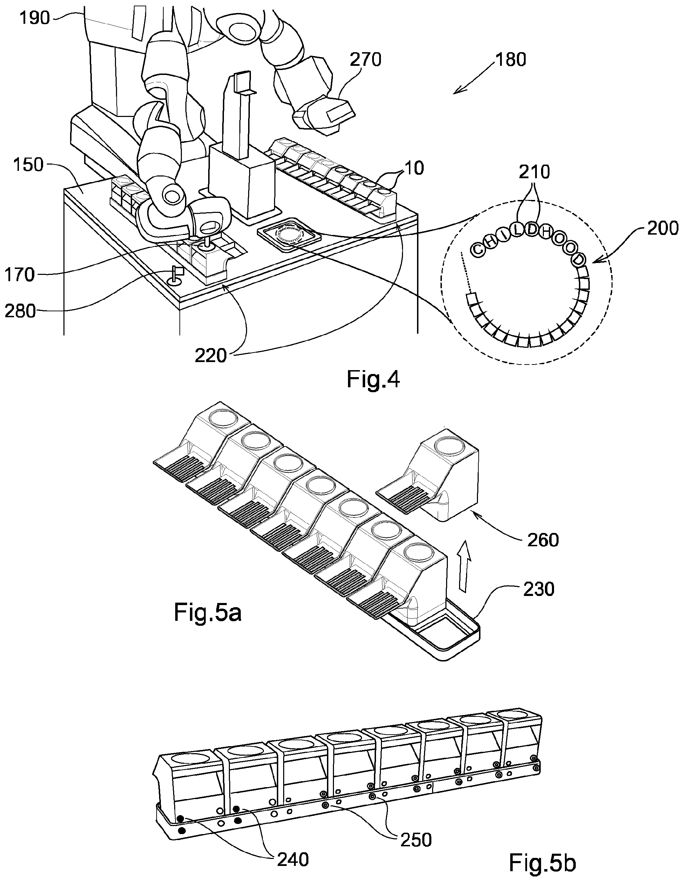

The housing 20 further comprises an inlet opening 110 closed with a removable cap 120. The inlet opening 110 can be used for filling the component dispenser 10 with components 60 although nothing prevents one from filling the component dispenser 10 through the outlet opening 50 should one find this more convenient. The housing 20 including the outlet tray 70 is manufactured in one piece by 3D printing in plastic. The cap 120 and the pick surface 80 with the corresponding screws 90 are separate from the housing 20, but none of these elements moves in relation to one another during the dispensing of components 60. On its top the housing 20 comprises a flat circular region 130 allowing a suction cup 170 (see figures 3 and 4) to take hold of the component dispenser 10. The circular region 130 comprises a QR code 140 for identifying the contents of the component dispenser 10. The QR code 140 can also be used to precisely locate the component dispenser 10 in a workspace such that a location fixture is unnecessary.

Referring to figures 3a to 3d, the component dispenser 10 is configured to displace a selection of components 60 from the reservoir 30 into the dosing volume 40 as a result of turning the component dispenser 10 over and then back to its upright position. The component dispenser 10 is first lifted off a work surface 150 to a height sufficient to allow a rotation through 180 degrees (figure 3b). Following this, the component dispenser 10 is rotated 180 degrees backwards to an inverted position (figure 3c), causing the components 60 inside to completely fill the dosing volume 40. The component dispenser 10 is then rotated 180 degrees forwards (figure 3d), which causes all the components 60 not trapped in the dosing volume 40 to return into the reservoir 30.

Referring to figures 3e to 3h, the component dispenser 10 is configured to displace the selection of components 60 from the dosing volume 40 onto the pick surface 80 as a result of tipping the component dispenser 10 forwards by an angle θ (figure 3e), which angle θ may be e.g. 5-10 degrees depending on the components 60 concerned. In addition to tipping the component dispenser 10 may also be exposed to shaking or other movements in order to facilitate the displacement of the components 60. The tipping causes the components 60 lying in the dosing volume 40 to roll onto the baffle plate 160, from where they continue to roll out through the outlet opening 50 and onto the pick surface 80. The component dispenser 10 is returned to its upright position (figure 3f) and a shaking movement appropriate for the components 60 concerned is applied in order to spread out and/or align the components 60 on the pick surface 80 (figure 3g). Once the shaking is complete, the component dispenser 10 is returned onto the work surface 150 (figure 3h) .

In figures 3a to 3h the component dispenser 10 is illustrated as a part of a robot system 180 (see figure 4), whereby the movements of the component dispenser 10 are actuated by an industrial robot 190 holding the component dispenser 10 by means of a suction cup 170. The robot system 180 may comprise a vision system which takes a picture of the pick surface 80 when the components 60 have been dispensed, and identifies components 60 lying in a suitable orientation for picking. The robot 190 may then pick components 60 from the pick surface 80 to fulfil its primary task. When all components 60 lying in a suitable orientation for picking have been picked, the robot 190 repeats the dispensing cycle, at the start of which any non-pickable components 60 remaining on the pick surface 80 are returned into the reservoir 30. The component dispenser 10 is configured to return any remaining components 60 back into the reservoir 30 as a result of rotating the component dispenser 10 backwards (figure 3c).

Referring to figures 4, 5a and 5b, a robot system 180 according to one embodiment of the invention comprises an industrial robot 190 whose primary task is to assemble bracelets 200 comprising sixteen different types of beads 210. The robot system 180 comprises sixteen component dispensers 10 according to figures 1-3, each configured to dispense one type of bead 210. The component dispensers 10 are located in two arrays 220, one on each side of the robot 190, using fixtures 230 secured to a work surface 150. To ensure that an operator of the robot system 180 fills each component dispenser 10 with the correct type of bead 210, there exists a position 240 on the rear of each component dispenser 10 into which an example bead 210 can be fixed, in order to provide an unambiguous visual cue. Similarly, the fixture 230 contains corresponding mountings 250 for the example beads 210 so that the operator replaces the component dispensers 10 in the correct slots in the fixture 230. The component dispensers 10 have non-symmetrical bases 260 which furthermore prevent the component dispensers 10 being installed the wrong way around.

The robot 190 is configured to actuate each of the sixteen component dispensers 10 to dispense components 60 when no components 60 lying in a suitable orientation for picking can be identified on the respective pick surface 80. Instead of actuating each of the component dispensers 10 separately, the robot 190 can actuate a plurality of them simultaneously provided that they are fixed together. For example, assuming that the component dispensers 10 are fixedly attached to the fixture 230 and the payload of the robot 190 allows this, eight component dispensers 10 can be actuated simultaneously by taking hold of one of them and carrying out the movements according to figures 3a to 3h.

When the robot 190 is used to actuate each of the component dispensers 10 separately, the robot 190 can be configured to determine whether the respective component dispenser 10 is about to be out of components 60 by weighing it. The weighing can for example be based on a sensor output of a force sensor integrated into a robot wrist 270, or on motor currents obtained from the robot's 190 motors. If a component dispenser 10 is determined to be close to empty, this can be indicated to the operator. The indication can be done for example visually by means of a flag 280 that the robot 190 places behind a respective component dispenser 10.

The invention is not limited to the embodiments shown above, but the person skilled in the art may modify them in a plurality of ways within the scope of the invention as defined by the claims.

## Claims

1. A component dispenser (10) comprising a housing (20) accommodating in its interior:
- a reservoir (30) for holding components (60), and
- a dosing volume (40),
the component dispenser further comprising a pick surface (80), which is located outside the housing (20) and suitable to let an industrial robot (190) pick components (60) from the pick surface (80),
the component dispenser (10) configured to:
- displace a selection of components (60) from the reservoir (30) into the dosing volume (40) as a result of the component dispenser (10) being exposed to a first sequence of movements,
- displace the selection of components (60) from the dosing volume (40) onto the pick surface (80) as a result of the component dispenser (10) being exposed to a second sequence of movements, and
- return any components (60) remaining on the pick surface (80) back into the reservoir (30) as a result of the component dispenser (10) being exposed to a third sequence of movements.

2. A component dispenser (10) according to claim 1, the component dispenser (10) being configured to be actuated by external means in the form of an industrial robot (190) .

3. A component dispenser (10) according to any of the preceding claims, the component dispenser (10) comprising only parts that are immobile in relation to one another during the displacement of the selection of components (60) from the reservoir (30) into the dosing volume (40) and further onto the pick surface (80), and the return of any components (60) remaining on the pick surface (80) back into the reservoir (30).

4. A component dispenser (10) according to any of the preceding claims, wherein the pick surface (80) is configured to be exchangeable.

5. A component dispenser (10) according to any of the preceding claims, wherein the housing (20) comprises an outlet opening (50) arranged to let components exit onto an outlet tray (70) to which the pick surface (80) is attached.

6. A component dispenser (10) according to any of the preceding claims, wherein the pick surface (80) is configured to align the components (60) to be dispensed.

7. A robot system (180) comprising an industrial robot (190) and at least one component dispenser (10) according to any of the preceding claims.

8. A robot system (180) according to claim 7, wherein the robot (190) is configured to actuate each component dispenser (10).

9. A robot system (180) according to claim 7, wherein the robot (190) is configured to actuate a plurality of component dispensers, which are fixed together, simultaneously by taking hold of one of them.

10. A method for dispensing components (60), the method comprising the steps of:
- providing a component dispenser (10) according to any of claims 1 to 6; and
- actuating the component dispenser (10) by external means to dispense components (60) from the reservoir (30) onto the pick surface (80).

11. A method according to claim 10, wherein the component dispenser (10) is actuated by external means in the form of an industrial robot (190).

12. A method according to claim 10 or 11, wherein the method comprises one or more of the steps of:
turning over the component dispenser (10);
tipping the component dispenser (10);
shaking the component dispenser (10).

13. A method according to any of claims 10 to 12, wherein the method comprises the step of determining whether the component dispenser (10) is about to be out of components (60).

14. A method according to claim 13, wherein the method comprises the step of weighing the component dispenser (10) .

## Patentansprüche

1. Komponentenspender (10), der ein Gehäuse (20) umfasst, in dessen Innenraum Folgendes untergebracht ist:
- ein Behälter (30) zum Fassen von Komponenten (60) und
- ein Dosierraum (40),
wobei der Komponentenspender weiter eine Aufnahmefläche (80), die sich außerhalb des Gehäuses (20) befindet und dafür geeignet ist, um zuzulassen, dass ein Industrieroboter (190) Komponenten (60) von der Aufnahmefläche (80) aufnimmt, umfasst, wobei der Komponentenspender (10) für Folgendes konfiguriert ist:
- Versetzen einer Auswahl von Komponenten (60) aus dem Behälter (30) in den Dosierraum (40), weil der Komponentenspender (10) einer ersten Folge von Bewegungen ausgesetzt wird,
- Versetzen der Auswahl von Komponenten (60) aus dem Dosierraum (40) auf die Aufnahmefläche (80), weil der Komponentenspender (10) einer zweiten Folge von Bewegungen ausgesetzt wird, und
- Zurückführen jeglicher noch auf der Aufnahmefläche (80) befindlicher Komponenten (60) in den Behälter (30), weil der Komponentenspender (10) einer dritten Folge von Bewegungen ausgesetzt wird.

2. Komponentenspender (10) nach Anspruch 1, wobei der Komponentenspender (10) so konfiguriert ist, dass er durch externe Mittel in Form eines Industrieroboters (190) betätigbar ist.

3. Komponentenspender (10) nach einem der vorhergehenden Ansprüche, wobei der Komponentenspender (10) nur Teile umfasst, die während der Versetzung der Auswahl von Komponenten (60) aus dem Behälter (30) in den Dosierraum (40) und weiter auf die Aufnahmefläche (80) und der Zurückführung jeglicher noch auf der Aufnahmefläche (80) befindlicher Komponenten (60) in den Behälter (30) mit Bezug zueinander unbeweglich sind.

4. Komponentenspender (10) nach einem der vorhergehenden Ansprüche, wobei die Aufnahmefläche (80) so konfiguriert ist, dass sie austauschbar ist.

5. Komponentenspender (10) nach einem der vorhergehenden Ansprüche, wobei das Gehäuse (20) eine Austrittsöffnung (50) umfasst, die dazu ausgelegt ist zuzulassen, dass Komponenten in ein Austrittsfach (70), an dem die Aufnahmefläche (80) angebracht ist, austreten.

6. Komponentenspender (10) nach einem der vorhergehenden Ansprüche, wobei die Aufnahmefläche (80) konfiguriert ist, um die auszugebenden Komponenten (60) auszurichten.

7. Robotersystem (180), das einen Industrieroboter (190) und mindestens einen Komponentenspender (10) nach einem der vorhergehenden Ansprüche umfasst.

8. Robotersystem (180) nach Anspruch 7, wobei der Roboter (190) konfiguriert ist, um jeden Komponentenspender (10) zu betätigen.

9. Robotersystem (180) nach Anspruch 7, wobei der Roboter (190) konfiguriert ist, um eine Vielzahl von Komponentenspendern, die aneinander befestigt sind, gleichzeitig, indem er einen von ihnen greift, zu betätigen.

10. Verfahren zum Ausgeben von Komponenten (60), wobei das Verfahren die folgenden Schritte umfasst:
- Bereitstellen eines Komponentenspenders (10) nach einem der Ansprüche 1 bis 6; und
- Betätigen des Komponentenspenders (10) durch externe Mittel, um Komponenten (60) aus dem Behälter (30) auf die Aufnahmefläche (80) auszugeben.

11. Verfahren nach Anspruch 10, wobei der Komponentenspender (10) durch externe Mittel in Form eines Industrieroboters (190) betätigt wird.

12. Verfahren nach Anspruch 10 oder 11, wobei das Verfahren einen oder mehrere der folgenden Schritte umfasst:
Umdrehen des Komponentenspenders (10);
Kippen des Komponentenspenders (10);
Schütteln des Komponentenspenders (10).

13. Verfahren nach einem der Ansprüche 10 bis 12, wobei das Verfahren den Schritt des Bestimmens, ob die Komponenten (60) im Komponentenspender (10) fast aufgebraucht sind, umfasst.

14. Verfahren nach Anspruch 13, wobei das Verfahren den Schritt des Wiegens des Komponentenspenders (10) umfasst.

## Revendications

1. Distributeur de composants (10) comprenant un boîtier (20) contenant dans son intérieur :
- un réservoir (30) pour contenir des composants (60), et
- un volume de dosage (40),
ce distributeur de composants comprenant en outre une surface de prélèvement (80), qui est située à l'extérieur du boîtier (20) et qui est adaptée de façon à permettre à un robot industriel (190) de prélever des composants (60) sur cette surface de prélèvement (80),
ce distributeur de composants (10) étant configuré de façon à :
- déplacer une sélection de composants (60) du réservoir (30) pour les mettre dans le volume de dosage (40) par suite de l'exposition du distributeur de composants (10) à une première séquence de mouvements,
- déplacer cette sélection de composants (60) du volume de dosage (40) sur la surface de prélèvement (80) par suite de l'exposition du distributeur de composants (10) à une deuxième séquence de mouvements,
- déplacer tous composants (60) restant sur la surface de prélèvement (80) pour les remettre dans le réservoir (30) par suite de l'exposition du distributeur de composants (10) à une troisième séquence de mouvements.

2. Distributeur de composants (10) selon la revendication 1, ce distributeur de composants (10) étant configuré de façon à être actionné par un moyen externe sous la forme d'un robot industriel (190).

3. Distributeur de composants (10) selon l'une quelconque des revendications précédentes, ce distributeur de composants (10) comportant seulement des pièces qui sont immobiles l'une par rapport à l'autre pendant le déplacement de la sélection de composants (60) depuis le réservoir (30) dans le volume de dosage (40) et ensuite sur la surface de prélèvement (80), et pendant le retour de tous composants (60) restant sur la surface de prélèvement (80) dans le réservoir (30).

4. Distributeur de composants (10) selon l'une quelconque des revendications précédentes, dans lequel la surface de prélèvement (80) est configurée de façon à pouvoir être échangeable.

5. Distributeur de composants (10) selon l'une quelconque des revendications précédentes, dans lequel le boîtier (20) comporte une ouverture de sortie (50) agencée de façon à laisser sortir les composants sur un plateau de sortie (70) auquel la surface de prélèvement (80) est attachée.

6. Distributeur de composants (10) selon l'une quelconque des revendications précédentes, dans lequel la surface de prélèvement (80) est configurée de façon à aligner les composants (60) devant être distribués.

7. Système robotique (180) comprenant un robot industriel (190) et au moins un distributeur de composants (10) selon l'une quelconque des revendications précédentes.

8. Système robotique (180) selon la revendication 7, dans lequel le robot (190) est configuré de façon à actionner chaque distributeur de composants (10).

9. Système robotique (180) selon la revendication 7, dans lequel le robot (190) est configuré de façon à actionner une pluralité de distributeurs de composants, qui sont fixés ensemble, simultanément en saisissant l'un d'eux.

10. Procédé de distribution de composants (60), ce procédé comprenant les étapes consistant à :
- prévoir un distributeur de composants (10) selon l'une quelconque des revendications 1 à 6 ; et à
- actionner ce distributeur de composants (10) par un moyen externe pour distribuer des composants (60) du réservoir (30) sur la surface de prélèvement (80).

11. Procédé selon la revendication 10, dans lequel le distributeur de composants (10) est actionné par un moyen externe sous la forme d'un robot industriel (190) .

12. Procédé selon la revendication 10 ou 11, ce procédé comprenant une ou plusieurs des étapes consistant à :
retourner le distributeur de composants (10) ;
faire basculer le distributeur de composants (10) ;
secouer le distributeur de composants (10).

13. Procédé selon l'une quelconque des revendications 10 à 12, ce procédé comprenant l'étape consistant à déterminer si le distributeur de composants (10) est sur le point de ne plus contenir de composants (60).

14. Procédé selon la revendication 13, ce procédé comprenant l'étape consistant à peser le distributeur de composants (10).
